# Europäisches Patentamt
## European Patent Office
## Office européen des brevets

(19)

(11) Veröffentlichungsnummer: **0 279 772 B1**

(12) **EUROPÄISCHE PATENTSCHRIFT**

(45) Veröffentlichungstag der Patentschrift: **09.06.93**

(51) Int. Cl.⁵: **C04B 41/85**, C04B 41/50, C04B 35/68

(21) Anmeldenummer: **88730034.1**

(22) Anmeldetag: **12.02.88**

(54) **Silikastein sowie Verfahren zu seiner Herstellung.**

(30) Priorität: **17.02.87 DE 3705002**

(43) Veröffentlichungstag der Anmeldung:
**24.08.88 Patentblatt 88/34**

(45) Bekanntmachung des Hinweises auf die Patenterteilung:
**09.06.93 Patentblatt 93/23**

(84) Benannte Vertragsstaaten:
**BE DE ES FR GB GR IT NL SE**

(56) Entgegenhaltungen:
**DD-A- 247 209**
**DE-A- 2 223 142**
**DE-A- 3 032 920**

(73) Patentinhaber: **Dr. C. Otto Feuerfest GmbH**
**Dr.-C.-Otto-Strasse 222**
**W-4630 Bochum 5(DE)**

(72) Erfinder: **Koschlig, Hans-Joachim, Dr.**
**Am Schamberge 10 b**
**W-4630 Bochum 5(DE)**
Erfinder: **Overkott, Engelbert, Dr.**
**Nachtigallenstrasse 30**
**W-5820 Gevelsberg(DE)**

(74) Vertreter: **Patentanwälte Dr. Solf & Zapf**
**Schlossbleiche 20 Postfach 13 01 13**
**W-5600 Wuppertal 1 (DE)**

## Beschreibung

Die Erfindung betrifft einen Silikastein sowie ein Verfahren zu seiner Herstellung.

Silikasteine werden u.a. insbesondere in Koksöfen verwendet. Bei der Herstellung von Koks wird ein in einer Kokskammer eines Koksofens liegendes Kohlegemisch durch einen thermischen Prozeß in Koks umgewandelt. Die Wärmezufuhr erfolgt aus einer Heizkammer indirekt von außen durch die aus Silikasteinen bestehenden Wandungen der Kokskammer.

Bei der Verkokungstechnologie handelt es sich um einen zyklischen Prozeß, der etwa 20 Stunden dauert. Alle 20 Stunden wird eine Kokskammer von heißem Koks befreit und unmittelbar darauf mit einem kalten Kohlegemisch wieder beschickt. Dabei kühlt die Wandung der Kokskammer innerhalb kurzer Zeit sehr stark ab und wird dann sehr schnell wieder auf hohe Temperaturen gebracht. Wegen dieser Belastungen der Wandung der Koksofenkammern werden vom Baustoff der Wandungen hauptsächlich zwei Eigenschaften gefordert:

- Hohe Resistenz gegen Temperaturschock in einem relativ hohen Temperaturbereich (Temperaturwechselbeständigkeit);
- hohe Wärmeleitfähigkeit für eine möglichst rasche und verlustfreie Übertragung der Wärme aus der Heizkammer in die Kokskammer.

Die Temperaturwechselbeständigkeit wird durch einen niedrigen Ausdehnungskoeffizienten im entsprechenden Temperaturbereich erzielt.

Bei Silikasteinen für Koksofenkammerwandungen, die vornehmlich aus Quarz enthaltenden Gemengen mit 2 bis 3 Gew.% Kalk keramisch gebrannt werden, wobei der Quarz in die Hochtemperaturphasen der Kieselsäure, nämlich Tridymit und Cristobalit, umwandelt, ist man bestrebt, einen möglichst hohen Umwandlungsgrad zu Tridymit zu erwirken, weil diese Phase die beste Temperaturwechselbeständigkeit gewährleistet. Die Umwandlung zu Tridymit erfordert aber eine sehr sorgfältige, genaue und langsame Brennführung, weil anderenfalls eine schnellere Umwandlung in die weniger erwünschte Phase Cristobalit erfolgt. Die Erfolge, die man insoweit bisher durch die Rohstoffkornzusammensetzung, die Rohstoffauswahl und das Brennen erzielen konnte, sind ausgeschöpft und können nicht mehr verbessert werden. So ist es bisher unter wirtschaftlich vertretbaren Bedingungen nicht gelungen, eine optimale Umwandlungsrate des Quarzes zu Tridymit zu erreichen.

Aus der DE-OS 22 20 474 ist ein Verfahren zur Herstellung von feuerfesten Steinen mit hohem Tridymitgehalt unter Bildung einer gut plastischen Masse aus Siliziumdioxid-Material bekannt, wobei ein Gemenge aus einem Siliziumdioxid-Material Wasser und Kalkhydrat verwendet wird. Das Siliziumdioxid-Material stammt aus den Abgasen von Schmelzöfen zur Herstellung von metallischem Silizium oder siliziumhaltigen Legierungen. Mit einem Ammoniumsalz werden zunächst die Kalziumverbindungen aus dem Gemenge gefällt und dann durch eine besondere Brennführung dafür gesorgt, daß die Umwandlung des Siliziumdioxid-Materials in Tridymit erfolgt. Das nach dem bekannten Verfahren verwendete Siliziumdioxid-Material ist zur Herstellung von Silikasteinen für Koksofenkammerwandungen ungeeignet, weil die daraus herstellbaren Produkte eine zu hohe Porosität und damit verbunden eine zu geringe Wärmeleitfähigkeit aufweisen würden. Sie würden außerdem eine zu geringe Festigkeit besitzen. Selbst eine teilweise Verwendung im Gemisch mit üblichen Silikagemengen würde nicht zu einer Qualitätsverbesserung von Silikasteinen führen, weil bei der für das Brennen der Silikasteine erforderlichen üblichen Brennführung die Umwandlung des Siliziumdioxid-Staubmaterials in Cristobalit erfolgen würde. Eine auf das Siliziumdioxid-Staubmaterial abgestellte Änderung der Brennführung würde dagegen zu einer ungenügenden Umwandlung des Quarzgehaltes der Rohmasse führen.

Die Wärmeleitfähigkeit der Silikasteine ist direkt abhängig von der stofflichen Zusammensetzung und von der Raumdichte (Porosität).

Bezüglich der stofflichen Zusammensetzung bewirkt Tridymit eine bessere Wärmeleitfähigkeit als Cristobalit, so daß auch insofern anzustreben ist, einen möglichst hohen Tridymitgehalt zu produzieren. Der Tridymitgehalt erhöht sich zwar aus dem Restquarzgehalt und/oder dem Cristobalitgehalt der gebrannten Silikasteine im Laufe der Temperaturbelastung im eingebauten Zustand der Steine; diese Tridymitumwandlung ist aber mit Phasensprüngen verbunden, die zur Beeinträchtigung der Festigkeit (Zermürbung) der Steine führen kann. Es wird deshalb angestrebt, eine vollständige Umwandlung des Quarzes in Tridymit zu erwirken, was aber - wie bereits erwähnt - mit einer wirtschaftlich vertretbaren Brenndauer nicht erreichbar ist.

In bezug auf die stoffliche Zusammensetzung zur Verbesserung der Wärmeleitfähigkeit von Silikasteinen ist außerdem vorgeschlagen worden, ein Material mit einer hohen Wärmeleitfähigkeit z.B. Silziumcarbid dem Gemenge zuzusetzen. Das Siliziumcarbid wird aber durch den Kontakt mit der Ofenatmosphäre oxidiert, es dehnt sich dabei aus und zermürbt die Steine (DE-PS 28 36 691, Spalte 2, Zeile 19 bis 44).

Aus der DE-OS 22 17 271 ist bekannt, für die Wandung von Koksofenkammern Siliziumcarbidsteine zu verwenden, die im wesentlichen aus einem Gemenge aus Siliziumcarbidgranulat und einem mullitischen Bindemittel gebrannt sind, und zwar derart, daß das mullitische Bindemittel eine Glasphasenschicht auf jedem Siliziumcarbidkorn bildet, die ein Eindringen von Oxidationsmitteln in das Siliziumcarbidkorn verhindern sollen. Die Steine werden außerdem noch mit einem Schutzanstrich versehen, der beim Betrieb des Koksofens einbrennen und Poren verschließen soll. Die Übertragung dieser Lehre auf Silikasteine, die zur Verbesserung der Wärmeleitfähigkeit körniges Siliziumcarbid enthalten, ist nicht möglich, weil die Glasphase bei Silikasteinen die Temperaturwechselbeständigkeit ungünstig beeinflussen und außerdem zu einer Erniedrigung der Festigkeit und Feuerbeständigkeit führen würde. Mullitisches Bindemittel behindert außerdem die Qaurz-Cristobalit-Tridymit-Umwandlung so stark, daß keine brauchbaren Silikasteine herstellbar wären.

In diesem Zusammenhang ist zudem aus der DE-OS 32 35 841 bekannt, einen Siliziumcarbid-Sinterkörper gegen Oxidation dadurch zu schützen, daß die Poren des Körpers mit einer Aufschlämmung von feinen Siliziumcarbidteilchen gefüllt werden. Vor der Verwendung der Körper oder während des Betriebes sollen sich zunächst in der äußeren Schicht der getrockneten Aufschlämmung aus den Silziumcarbidteilchen Siliziumdioxidteilchen bilden, die mehr Raum fordern und die Poren blockieren und damit das Eindiffundieren von Sauerstoff verhindern sollen. Dieser Schutz wird unwirksam, wenn die Siliziumcarbidteilchen verbraucht sind. Insofern ist diese Lehre nicht anwendbar auf Silikasteine, die im Gefüge Siliziumcarbidkörper aufweisen, weil Silikasteine über sehr lange Zeiträume in Koksöfen standhalten müssen und nicht gewährleistet werden kann, daß genügend feinteiliges Siliziumcarbid vorrätig ist. Außerdem würden sich aus dem aus den Siliziumcarbidteilchen entstandenen Siliziumdioxid unkontrolliert Cristobalit und Tridymit bilden. Die damit verbundenen Phasensprünge würden den Stein zermürben.

Bezüglich der Raumdichte der Silikasteine ist grundsätzlich bekannt, daß bei der Umwandlung von Quarz in die Kieselsäurephasen Tridymit und Cristobalit Diehteänderungen auftreten, die zu einem Wachsen der Formlinge während des Brandes führen. Daraus ergibt sich, daß Silikasteine während ihres Herstellungsprozesses ihre Außenmaße ändern. Damit ist eine Vergrößerung des Porenvolumens sowie korrelierend eine Erniedrigung der Ausgangsrohdichte verbunden. Infolge dieser Besonderheiten beim Herstellungsprozeß sind bezüglich der erreichbaren Minimalporosität und der zu erzielenden Rohdichte Grenzen gesetzt. Diese liegen dem Stand der Technik entsprechend für die scheinbare Porosität bei etwa 18 % bzw. für die Rohdichte bei etwa 1,92 $g/cm^3$.

Zur Erhöhung der Raumdichte und damit zur Erhöhung der Wärmeleitfähigkeit von Silikasteinen ist aus der DE-PS 28 36 691 bekannt, dem Gemenge 0,5 bis 10 Gew.% Siliziumnitrid und/oder Siliziumcarbid zuzusetzen und eine ganz besondere Brennführung einzuhalten sowie eine spezielle Ofenatmoshäre zur Verfügung zu stellen. Während des Brennens soll sich aus dem Siliziumnitrid und Siliziumcarbid vollständig Siliziumdioxid bilden, das aufgrund des Kornwachstums die Poren ausfüllen soll, so daß daraus eine höhere Raumdichte bzw. geringere Porosität resultiert. Die Temperaturführung ist jedoch äußerst kompliziert, und außerdem ist die Brenndauer sehr viel länger als bei einem herkömmlichen Brand, so daß das Brennen unwirtschaftlich ist. Außerdem wird keine ausreichende Umwandlung des sich aus dem Siliziumnitrid und dem Siliziumcarbid bildende Siliziumdioxids zu Tridymit erreicht, so daß diese Umwandlung in erheblichem Umfang noch während des Betriebes des Koksofens erfolgt mit dem bereits erwähnten Nachteil der möglichen Zermürbung der Steine der Wandung. Hinzu kommt, daß die Abnahme der Porosität mit einer Erhöhung der Sprödigkeit bzw. Verringerung der Elastizität des Matrixmaterials des gebrannten Steins erkauft wird, was wiederum eine ungünstigere Temperaturwechselbeständigkeit zur Folge hat.

Die DE-B 22 23 142 befaßt sich mit der Verwendung einer wäßrigen Suspension kolloidaler Kieselsäure bestimmter Teilchengröße zur Erhöhung der Widerstandsfähigkeit feuerfester Auskleidungsmaterialien oder Futter auf der Basis von Siliciumdioxid, Aluminiumsilikat und/oder Aluminiumoxid gegen den Angriff basischer Schlacken. Die aufgrund dieses Verfahrens hergestellten, feuerfesten Schamotte-Produkte zeigen eine verbesserte Widerstandsfähigkeit gegen den Angriff basischer Schlacken.

Aufgabe der Erfindung ist, Silikasteine aus üblichen Gemengen mit üblichen Misch- und Preßverfahren sowie mit üblichen Trocknungs-und Brennbedingungen und zumindest gleichlangen, vorzugsweise kürzeren Brennzeiten, zu schaffen, die einen höheren Tridymitgehalt als herkömmliche Silikasteine und eine bessere Wärmeleitfähigkeit bei vergleichbarer Porosität und Elastizität, verbunden mit einer dennoch höheren Festigkeit, aufweisen.

Diese Aufgabe wird durch die Merkmale der Ansprüche 1, 3, 4, 7, 10 14 gelöst.

Die Erfindung sieht die Verwendung von Kieselsol und/oder Kieselgel vor.

Kieselsole sind wäßrige Lösungen von kolloidalem, amorphem $SiO_2$, die üblicherweise 15 bis maximal 60%ig im Handel sind. Sie werden hauptsächlich als Bindemittel z.B. in Feingußschlickern und bei der Bindung keramischer Fasern zur Modifizierung von Oberflächen z.B. bei der Textilausrüstung und Papierbehandlung und in kolloidchemischen Reaktionen z.B. bei der Getränkeklärung, Gipsverflüssigung und Halbleiterpolierung verwendet.

Die Bindemittelwirkung beruht auf dem Übergang des Kieselsols in Kieselgel. Das dabei entstehende Kieselsäuregerüst wirkt bindend z.B. bei der Bindung feuerfester keramischer Materialien. Für die Bindung feuerfester Materialien ist wesentlich, daß nach dem Trocknen nahezu alkalifreies, amorphes Siliziumdioxid vorliegt, dessen Schmelzpunkt bei ungefähr 1480° C liegt und das geringe thermische Ausdehnung sowie keine Modifikationssprünge aufweist. Daraus resultieren Beständigkeit bei hohen Temperaturen und Hitzeschockresistenz. Bei der Verwendung von Kieselsolen als Bindemittel werden diese entweder direkt in zunächst flüssigen, wäßrigen Anmischungen oder als Imprägniermittel für geformte, feste, poröse Materialien verwendet.

Kieselsole haben somit Eigenschaften, die bei Silikasteinen unerwünscht sind. Zunächst einmal kann ein amorphes, poröses, sehr leichtes Produkt keinen nennenswerten Beitrag zur Erhöhung der Wärmeleitfähigkeit leisten. Bei Einwirkung hoher Temperaturen entsteht aus der amorphen Masse bei etwa 1480° C schon eine Schmelze, ohne daß Modifikationsänderungen auftreten. In Silikasteinen wirkt sich eine solches Reaktionsverhalten der Kieselsäure insbesondere auf die Wärmeleitfähigkeit und die erfoderliche Thermoschockbestandigkeit ungünstig aus, obwohl das aus dem Sol entstehende Gel an sich eine geringe thermische Ausdehnung und eine gute Hitzeschockresistenz aufweisen soll.

Neben den Kieselsolen sind Kieselgele auf dem Markt. Kieselgele sind geformte oder ungeformte Kieselsäureprodukte von elastischer bis fester Konsistenz mit lockerer bis dichter Porenstruktur. In den Kieselgelen liegt die Kieselsäure in Form hochkonzentrierter Polykieselsäuren mit oberflächenreicher Blattstruktur vor. Die Herstellung der Kieselgele erfolgt meist aus Wasserglas durch Umsetzung mit Mineralsäuren. Bei den derart gebildeten und gegebenenfalls als Kieselsole technisch eingesztzen Kiesel-säurehydrosolen kann bei entsprechender Temperatur und pH-Wert die Umhüllung der kolloiddispersen Kieselsäureteilchen mit Wasser so weit gehen, daß das inkohärente System zu einem Gel erstarrt, bei dem die dispersen Kieselsäuren netz- oder wabenartig im Wasser angeordnet sind. In Abhängigkeit vom Trocknungsgrad erhält man Kieselgele mit Feststoffgehalten bis zu 95 %. Die Kieselgele weisen Oberflächen auf, die bei etwa 800 $m^2/g$ liegen. Sie verhalten sich bei der Einwirkung von Wärme wie die Kieselsole und erscheinen deshalb von Hause aus ungeeignet für eine Verwendung bei der Herstellung von Silikasteinen.

Aufgrund der beschriebenen bekannten Eigenschaften der Kieselsole und Kieselgele ist einleuchtend, daß man diese Produkte bei der Herstellung von Silikasteinen unbeachtet ließ. Man mußte mit einer Beeinträchtigung bisher erzielbarer Eigenschaften der Silikasteine rechnen. Es war demgegenüber völlig überraschend, daß die Kieselsole und Kieselgele im Gemisch mit üblichem Silikasteingemenge beim Brennen Modifikationen der Kieselsäure bilden. Es konnte festgestellt werden, daß sich aus dem Kieselsolen oder Kieselgelen fast vollständig ineinander verfilzte Tridymitkristalle in dichter Packung bilden, die zu einer beachtlichen Festigkeitserhöhung und zu einer Erhöhung der Wärmeleitfähigkeit bei gleicher Raumdichte im Vergleich zu handelsüblichen Silikasteinen führen. Außerdem wird die Thermoschockbeständigkeit erhöht. Die zu erwartende Glasphase bildet sich dagegen nicht. Der Tridymitanteil der Silikasteine ist höher als bei vergleichbaren Silikasteinen ohne Kieselsol oder Kieselgel. Es ist derzeit noch unbekannt, woraus die Tridymitbildung aus dem Kieselsol oder Kieselgel resultiert. Es wird angenommen, daß eine katalytisch beeinflussende Reaktion stattfindet, denn - und das war auch überraschend - die erhöhte Tridymitbildung wird nicht durch eine besonders lange oder spezielle Brennführung erreicht, wie das beim Verfahren nach der DE-PS 28 36 691 der Fall ist, sondern bei normaler üblicher Brennführung. Die bisher verwendeten Öfen können unverändert benutzt und unverändert gefahren werden. Dabei kann sogar die Brenndauer und Brenntemperatur reduziert werden, will man Silikasteine produzieren, die im Vergleich zu herkömmlichen Silikasteinen gleiche Qualität aufweisen.

Da die erfindungsgemäßen Silikasteine mit normaler Brennführung hergestellt werden, wandeln die anderen Rohstoffe der Masse wie üblich um, so daß daraus der übliche Tridymitgehalt und die üblichen Raumdichten erzielt werden. Zusätzlich erhält man einen weiteren Tridymitgehalt aus den Kieselsol- und/oder Kieselgelbestandteilen, der wegen des hohen Verfilzungsgrades auch zu einer höheren Raumdichte führt. Beide Merkmale - nämlich der höhere Tridymitgehalt und die höhere Raumdichte - bedingen die Erhöhung der Thermoschockresistenz und der Wärmeleitfähigkeit.

Vergleicht man diese neue Lehre mit der Lehre nach der DE-PS 28 36 691, dann erkennt man den überraschenden erheblichen technischen Fortschritt. Nach der DE-PS 28 36 691 wird zur Erhöhung der Raumdichte ein durch Oxidation bei hohen Temperaturen $SiO_2$ spendender Rohstoff zugesetzt. Um die Oxidationsreaktion zu bewirken, muß eine besondere Brennführung und Brennatmosphäre mit einer außergewöhnlich langen Brenndauer gewährleistet werden. Dabei kann zwar ein dichteres Gefüge gebildet werden, so daß die Wärmeleitfähigkeit erhöht ist; das Gefüge wird aber auch spröder, weil bei der langen Brenndauer gegebenfalls schon Glasphasen entstehen und die Temperaturschockbeständigkeit wird nicht verbessert; letztere wird eher schlechter wegen der hohen Sprödigkeit. Eine bessere Temperaturschockbeständigkeit könnte nur durch eine Erhöhung des Tridymitgehaltes hervorgerufen werden. Die nach dem bekannten Verfahren verwendeten Zusätze gehen aber nicht in Tridymit, sondern in amorphen Cristobalit über, so daß die Matrixporen mit dieser Phase ausgefüllt werden (DE-PS 28 36 691, Spalte 12, Zeile 37 bis 42). Nach der Lehre dieser Druckschrift war somit auch nur zu erwarten, daß der Zusatz einer $SiO_2$ spenden Substanz allenfalls die Raumdichte und damit die Wärmeleitfähigkeit erhöht und zur Cristobalitbildung in den Poren führt und daß diese Verbesserungen nur mit einer besonderen Brennführung erreichbar sind.

Nach einer Ausführungsform der Erfindung wird Kieselsol dem üblicherweise verwendeten Rohstoffgemenge zugesetzt. Dabei bleibt zweckmäßigerweise der Wassergehalt des Gemenges gleich, indem der Wassergehalt des Kieselsols berücksichtigt wird und eine entsprechend geringere Wassermenge der Rohmischung zugegeben wird. Die Verarbeitung des Rohstoffgemenges zu Silikasteinrohlingen bleibt unverändert. Ebenso unverändert bleiben die Trocknungszeiten und Trocknungstemperaturen.

Anstelle oder in Kombination mit dem Kieselsol kann Kieselgel in hochviskoser Form oder in Pulverform zugemischt werden. Vorzugsweise werden anionische Kieselsole z.B. Bayer-Kieselsole mit der Bezeichnung 200/30 % mit einem Feststoffgehalt von 30 Gew.%, einem pH-Wert von 9,0, einer Dichte von 1,20 $g/cm^3$, einer Viskosität von 3 bis 4 mPa x s, einer spezifischen Oberfläche von 200 $m^2$/g, einer Teilchengröße von 15 bis 20 nm oder Bayer-Kieselsole mit der Bezeichnung 300/40 % mit einem Feststoffgehalt von 40 Gew.%, einem pH-Wert von 10,0, einer Dichte von 1,29 $g/cm^3$, einer Viskosität von 7 bis 10 mPa x s, einer spezifischen Oberfläche von 200 $m^2$/g und einer Teilchengröße von 15 bis 20 nm.

Nach einer anderen Ausführungsform der Erfindung werden herkömmliche gebrannte Silikasteine mit einem Kieselsol getränkt, so daß das Kieselsol in die Poren des Steins eindringt. Vorzugsweise wird das Tränken bei Überdruck, insbesondere aber bei Unterdruck durchgeführt. Die getränkten Steine werden getrocknet z.B bei 60 bis 140° C, 6 bis 24 Std. und dann nochmals bei Temperaturen von z.B. 1050 bis 1450° C 6 bis 60 Stunden nachgebrannt. Es hat sich in überraschender Weise gezeigt, daß die Steine keinerlei beachtliche Volumenveränderung in ihren Außenmaßen erfahren und auch in diesem Fall aus dem Kieselsol nahezu vollständig Tridymit entsteht, der sich im Porenraum auswächst und dort ein verfilztes, dichtes, feinkristallines, bindungsverstärkendes Gefüge bildet. Es erhöht sich die Raumdichte z.B. um Werte zwischen 0,05 und 0,1 $g/cm^3$ und damit verbunden die Wärmeleitfähigkeit um z.B. 5 bis 10%. Die Temperaturschockbeständigkeit wird ebenfalls verbessert. Zum Tränken eignet sich insbesondere das bereits erwähnte Bayer-Kieselsol 200/30% und außerdem auch das Bayer-Kieselsol 300/30% mit einem Feststoffgehalt von 30%, einem pH-Wert von 9,8, einer Dichte von 1,21 $g/cm^3$, einer Viskosität von 3 bis 6 mPa x s, einer spezifischen Oberfläche von 300 $m^2$/g und einer Teilchengröße von 7 bis 8 nm.

Man kann in vorteilhafter Weise den zweiten Brand der Silikasteine auch in den Koksofen nach dem Einbau des Steins in die Koksofenkammerwandung verlegen. Dort vollzieht sich später während des für das gesamte Bauwerk vorgesehenen Inbetriebnahmeprogramms die Umwandlung des Kieselsols/-gels in die kristalline Modifikation des $SiO_2$, hauptsächlich in Tridymit. Auf diese Weise werden intergranulare Porenräume abgedichtet. Es entstehen dadurch zusätzliche Bindungsbrücken, die das Gefüge stärken, ohne daß die Steine eine beachtliche Volumenveränderung der Außenmaße erfahren. Gehandelt wird in diesem Fall der getränkte und nach dem Tränken getrocknete, d.h. vom überschüssigen Wasser befreite Silikastein.

Die Verwendung von Kieselsol und/oder Kieselgel führt zu einem weiteren überraschenden Effekt. Wenn dem Rohstoffgemenge ein die Wärmeleitfähigkeit erhöhender, zur Oxidation neigender Stoff z.B. ein Siliziumcarbid-Granulat mit Korngrößen zwischen 0,1 und 1,0, vorzugsweise zwischen 0,2 und 0,6 mm beigegeben wird, sorgt das Kieselsol und/oder Kieselgel für eine Schutzschicht auf den Siliziumcarbidkörnern, insbesondere aus verfilzten Tridymitkristallen in sehr dichter Anordnung. Diese Schutzschicht wird nicht mehr von den oxidierenden Gasen durchdrungen, so daß die Steine genauso beständig sind wie Steine ohne Siliziumcarbidbestandteile. Die Siliziumcarbid enthaltenden Steine haben aber bekanntermaßen eine erheblich bessere Wärmeleitfähigkeit.

Der überraschende Schutzschichteffekt kann auch durch nachträgliche Tränkung und Nachbrennen z.B. in situ, d.h. im Koksofen erzielt werden. Es ist noch nicht geklärt, warum eine aus Kieselsol und/oder Kieselgel erzeugte Schutzschicht derart wirkungsvoll und dauerhaft ist.

Vorzugsweise wird Siliziumcarbid im angegebenen Kornbereich in Mengen von 5 bis 25 Gew.%, vorzugsweise von 10 bis 20 Gew.%, dem Rohstoffgemenge zugesetzt. Bei einem normalen Silikatunnelofenbrand zwischen 1350 und 1450°C überziehen sich die Siliziumcarbid-Körner mit einer stabilen Schutzschicht, die z.B. während einer mehr als einjährigen Beanspruchung in oxidierender Atmosphäre bei 1400 bis 1440°C keine Oxidation des SiC zuläßt. Die Wärmeleitfähigkeit eines derartigen Produkts wird durch diese Zusätze um 15 bis 50% verbessert.

Vorteilhaft ist die Verwendung eines Siliziumcarbid-Granulats, das die folgende Siebanalyse aufweist:

| 0,5 - 1,0 mm | < 5 |
|---|---|
| 0,25 - 0,5 mm | 42 - 60% |
| 0,1 - 0,25 mm | 30 - 45% |
| < 0,1 mm | < 10 % |

Die Erfindung wird im folgenden anhand eines Vergleichsbeispiels dargestellt. Verglichen wird die Wärmeleitfähigkeit der erfindungsgemäß hergestellten Silikasteine mit handelsüblichen Silikasteinen. Die Herstellung der zum Vergleich dienenden Silikasteine erfolgte unter den bisher üblichen und dem Stande der Technik entsprechenden Herstellungsbedingungen für Silikasteine. Das Gemenge für die erfindungsgemäßen Produkte hat außer den neuen Zusätzen zum Gemenge keine weiteren Veränderungen erfahren. Die bisher üblichen Kornbänder wurden für das Rohstoffgemenge verwendet. Die Verformung erfolgte entsprechend den Herstellungsbedingungen für Silikasteine mit einem handelsüblichen Raumgewicht von 1,84 bis 1,85 g/cm³. Das Pressenformverfahren wurde ebenfalls beibehalten,

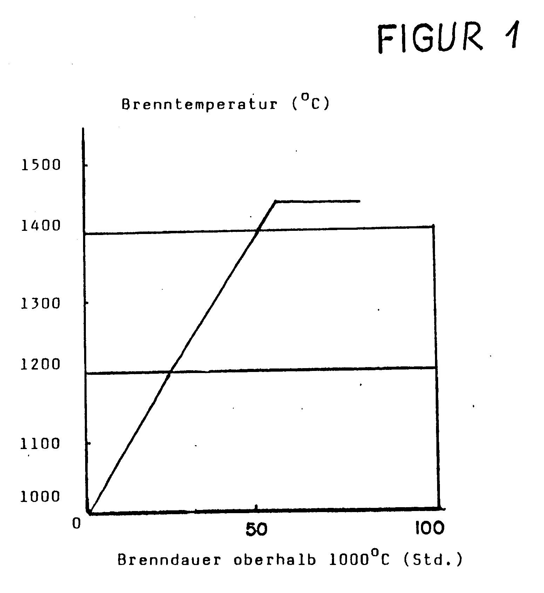

Es wurden die folgenden Gemenge zusammengestellt und daraus Silikasteinrohlinge geformt. Die geformten Steine wurden bei üblichen Bedingungen zu Silikasteinen gebrannt. Die Brennbedingungen sind aus der anliegenden Fig.1 erkennbar.

Rezepturen

1. <u>Silika KD</u>

| Quarzit 1 | 0 - 4 mm | 50 % |
|---|---|---|
| Quarzit 2 | 0 - 4 mm | 35 % |
| Quarzit gemahlen | < 1 mm | 15 % |
| Kalkhydrat | | 3,5 % |
| Binder organisch | | 0,5 % |

2. <u>Silika KD mit Kieselgel</u>

| Quarzit 1 | 0 - 4 mm | 50 % |
|---|---|---|
| Quarzit 2 | 0 - 4 mm | 35 % |
| Quarzit gemahlen | < 1 mm | 15 % |
| Kalziumcarbonat | | 4,5 % |
| Kieselgel | | 6,5 % |

Nach dem Brand getränkt mit Kieselsol unter Vakuum.
Gewichtsaufnahme Sol: 3 - 5 Gewichtsprozent des Steins.

3. <u>Silika KD mit 15% Zusatz SiC</u>

| Quarzit 1 | 0 - 4 mm | 50 % |
|---|---|---|
| Quarzit 2 | 0 - 4 mm | 35 % |
| SiC gemahlen | < 1 mm | 15 % |
| Kalkhydrat | | 3,5 % |
| Binder organisch | | 0,5 % |

Nach dem Brand getränkt mit Kieselsol unter Vakuum.
Gewichtsaufnahme Sol: 3 - 4 Gewichtsprozent des Steins.

7

## 4. Silika KD mit 15% Zusatz SiC sowie Kieselgel

| | | |
|---|---|---|
| Quarzit 1 | 0 – 4 mm | 50 % |
| Quarzit 2 | 0 – 4 mm | 35 % |
| SiC gemahlen | < 1 mm | 15 % |
| Kalziumcarbonat | | 4,5 % |
| Kieselgel | | 6,5 % |

Nach dem Brand mit Kieselsol unter Vakuum getränkt.

Gewichtsaufnahme Sol: 3 – 5 Gewichtsprozent des Steins.

Das Ergebnis des Vergleichs enthält die folgende Tabelle:

## Tabelle

Wärmeleitfähigkeit und physikalische Daten der Silikasteine

| Sorte | scheinbare Porosität $P_s$ (%) | Rohdichte $D(g/cm^3)$ | Wärmeleitfähigkeit (W/m°K) bei 400°C, | bei 800°C, | bei 1200°C |
|---|---|---|---|---|---|
| 1. Silika KD | 20,5 | 1,84 | 1,56 | 1,80 | 2,22 |
| 2. Silika KD mit 6,5% Kieselgel (getränkt) | 18,0 | 1,90 | 1,65 | 1,87 | 2,32 |
| 3. Silika + 15% SiC (getränkt) | 19,5 | 1,93 | 1,76 | 2,02 | 2,62 |
| 4. Silika + 15% SiC + 6,5% Kieselgel (getränkt) | 18,0 | 1,99 | 1,82 | 2,10 | 2,74 |

Aus dem Vergleichsbeispiel folgt, daß das erfindungsgemäße Verfahren sowohl das Zusetzen von Kieselsol und/oder Kieselgel zum Rohgemenge als auch das Tränken von Silikasteinen vorsieht, die entweder ohne Zusatz von Kieselsol und/oder Kieselgel zum Rohgemenge oder mit Zusatz hergestellt worden sind. Bevorzugt wird eine Zusatzmenge von Kieselsol und/oder Kieselgel zum Rohstoffgemenge in Mengen von 1,0 bis 3,0 Gew.% $SiO_2$, errechnet aus dem $SiO_2$-Gehalt des Kieselsols und/oder Kieselgels. Bei einer Tränkung werden die Bedingungen vorzugsweise derart eingestellt, daß der Silikastein 2,5 bis 10 Gew.% Kieselsol aufnimmt.

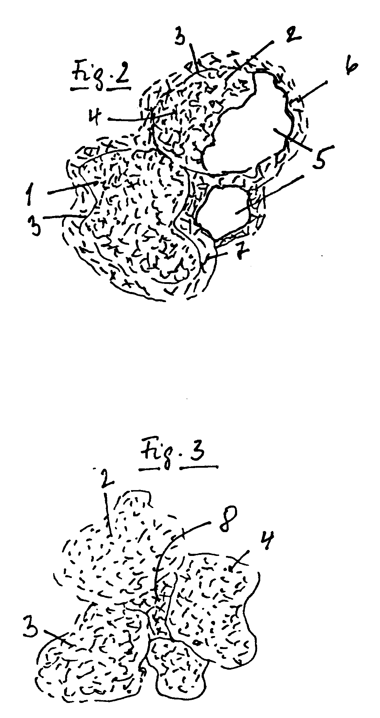

In Fig. 2 und 3 ist schematisch die Matrix eines erfindungsgemäßen Silikasteins dargestellt. Es handelt sich um eine sehr vereinfachte Darstellung einer Draufsicht auf einen Dünnschliff.

Es ist aus Fig. 2 ersichtlich, daß zwei Quarzkornstrukturen 1 und 2 noch schwach in Umrißlinien 3 erkennbar sind. Das Quarzkorn ist umgewandelt in feine, kleine Cristobalit- und Tridymitkristalle 4. Neben

EP 0 279 772 B1

der Quarzkornstruktur 2 befindet sich ein Siliziumcarbidkorn 5.

Um die Quarzkornstrukturen 1 und 2 sowie das Siliziumcarbidkorn 5 ist ein Saum 6 aus verfilzten Tridymitkristallen 7 gebildet. Die Tridymitkristalle 7 sind besser, stengeliger und länger als die aus dem Quarz entstandenen Cristobalit- und Tridymitkristalle 4 und außerdem verfilzt auskristallisiert. Der Saum 6 weist einen höheren Kristallisationsgrad auf als die Zonen der früheren Quarzkörner. Die Kristallisation im Saum 6 hat das Erscheinungsbild nach Art einer Sammelkristallisation und bildet somit einen eigenen, gut erkennbaren Matrixbestandteil.

Fig. 3 zeigt die Matrix eines herkömmlichen Silikasteins mit den Quarzkornstrukturen, in der lediglich die Zwickel 8 den verfilzten, aus Kieselsol und/oder Kieselgel gebildeten Tridymitanteil aufweisen.

Die anderen Varianten der erfindungsgemäßen Silikasteine sind nicht gesondert abgebildet. Die Matrix entspricht aber den in Fig. 2 und 3 abgebildeten Bestandteilen, so daß die Raumform der Silikasteine durch die Sammelkristallisationsanordnung der aus dem Kieselsol und/oder Kieselgel gebildeten Tridymitkristalle erkennbar ist. Die Raumform wird außerdem durch den besseren Kristallisationsgrad und die im Vergleich zu den Kristallen in der Quarzkornstruktur stengeliger und länger auskristallisierten Tridymitkristalle charakterisiert.

Aus dem Vergleichsbeispiel erkennt man ohne weiteres, daß die Erfindung mit relativ einfachen Mitteln eine Verbesserung schafft, die ungewöhnlich ist und in keiner Weise vorsehbar war.

**Patentansprüche**

1. Silikastein mit in der Matrix erkennbaren Quarzkornstrukturen, im wesentlichen bestehend aus den aus Quarzkörnern umgewandelten kristallinen $SiO_2$-Phasen Cristobalit und Tridymit, wobei die Cristobalit- und/oder Tridymitkristalle im Steingefüge den Quarzkornstrukturen entsprechend gruppiert angeordnet sind,
dadurch **gekennzeichnet,** daß die Quarzkornstrukturen von einem aus einem Kieselgel und/oder Kieselsol gebildeten, dünnen Tridymitsaum umgeben sind, der aus feinen, miteinander verfilzten Tridymitkristallen besteht.

2. Silikastein nach Anspruch 1, dadurch gekennzeichnet, daß auch die Zwickel zwischen den Quarzkornstrukturen mit Tridymitsaum, wenigstens teilweise, vorzugsweise vollständig, mit aus einem Kieselsol und/oder Kieselgel gebildeten, verfilzten, feinkristallinen Tridymitanteil ausgefüllt sind.

3. Silikastein nach Anspruch 1 und/oder 2, dadurch gekennzeichnet,daß die Poren, insbesondere die Zwickelporen, mit einem Kieselsol ausgefüllt sind.

4. Silikastein mit in der Matrix erkennbaren, in Cristobalit und/oder Tridymit umgewandelten Quarzkornstrukturen, dadurch gekennzeichnet, daß die Poren des Steins, insbesondere die Zwickelporen, zumindest teilweise, vorzugsweise vollständig, mit einem Kieselsol und/oder Kieselgel ausgefüllt sind.

5. Silikastein mit in der Matrix erkennbaren, in Cristobalit und/oder Tridymit umgewandelten Quarzkornstrukturen, dadurch gekennzeichnet, daß die Poren, insbesondere die Zwickelporen, mit einem getrockneten Kieselsol ausgefüllt sind.

6. Silikastein nach einem oder mehreren der Ansprüche 1 bis 5, gekennzeichnet durch einen erhöhten, aus 2,5 bis 10 Gew.% Kieselsol und/oder Kieselgel gebildeten Tridymitgehalt.

7. Silikastein nach einem oder mehreren der Ansprüche 1 bis 6, zusätzlich enthaltend ein in der Matrix erkennbares Siliziumcarbid-Granulat.

8. Silikastein nach Anspruch 7, dadurch gekennzeichnet, daß der Gehalt an Siliziumcarbid-Granulat 5 bis 25 Gew.% beträgt.

9. Silikastein nach Anspruch 7 und/oder 8, dadurch gekennzeichnet, daß die Siliziumcarbid-Körner eine Schutzschicht aus miteinander verfilzten Tridymitkristallen aufweisen.

10. Verfahren zur Herstellung eines Silikasteins nach einem oder mehreren der Ansprüche 1 bis 9, wobei aus einem Rohstoffgemenge aus einer reinen, körnigen $SiO_2$-Komponente, insbesondere aus Quarzit-körnern, sowie aus Kalkhydrat und ggf. einem organischen Bindemittel ein Steinrohling geformt wird,

9

der unter üblichen Brennbedingungen gebrannt wird,
dadurch **gekennzeichnet,** daß dem Gemenge ein Kieselsol und/oder ein Kieselgel zugemischt wird.

**11.** Verfahren nach Anspruch 10, dadurch gekennzeichnet, daß Kieselsol und/oder Kieselgel in einer Menge von 1,0 bis 3,0 Gew.% $SiO_2$ zugemischt wird.

**12.** Verfahren nach Anspruch 10 und/oder 11, dadurch gekennzeichnet, daß der Silikastein nach dem Brennen mit einem Kieselsol getränkt wird.

**13.** Verfahren nach Anspruch 12, dadurch gekennzeichnet, daß der Silikastein nach dem Tränken erneut gebrannt wird, bis aus dem Kieselsol Tridymit entstanden ist.

**14.** Verfahren zur Herstellung eines Silikasteins aus üblichen Rohstoffgemengen und unter üblichen Brennbedingungen, dadurch gekennzeichnet, daß der gebrannte Stein mit einem Kieselsol getränkt wird.

**15.** Verfahren nach Anspruch 14, dadurch gekennzeichnet, daß der Silikastein nach der Tränkung gebrannt wird, bis aus dem Kieselsol Tridymit entstanden ist.

**16.** Verfahren nach einem oder mehreren der Ansprüche 10 bis 15, dadurch gekennzeichnet, daß ein anionisches Kieselsol und/oder Kieselgel verwendet wird.

**17.** Verfahren nach einem oder mehreren der Ansprüche 10 bis 15, dadurch gekennzeichnet, daß die Tränkung unter Einwirkung eines Überdrucks durchgeführt wird.

**18.** Verfahren nach einem oder mehreren der Ansprüche 10 bis 15, dadurch gekennzeichnet, daß die Tränkung unter Einwirkung eines Vakuums durchgeführt wird.

**19.** Verfahren nach einem oder mehreren der Ansprüche 10 bis 18, dadurch gekennzeichnet, daß dem Rohstoffgemenge ein Siliziumcarbid-Granulat zugemischt wird.

**20.** Verfahren nach Anspruch 19, dadurch gekennzeichnet, daß ein Siliziumcarbid-Granulat mit Korngrößen zwischen 0,1 und 1,0, vorzugsweise zwischen 0,2 und 0,6 mm, zugemischt wird.

**21.** Verfahren nach Anspruch 19 und/oder 20, dadurch gekennzeichnet, daß Siliziumcarbid in einer Menge von 5 bis 25 Gew.%, vorzugsweise von 10 bis 20 Gew.%, zugemischt wird.

**Claims**

**1.** Silica brick with quartz grain structures that are present in the matrix, substantially consisting of the crystalline $SiO_2$ phases cristobalite and tridymite converted from the quartz grains, whereby the cristobalite and/or tridymite crystals are arranged in the brick structure grouped corresponding to the quartz structures, characterised in that that the quartz grain structures are surrounded by a thin layer of tridymite formed from a silica gel and/or silica sol and which consists of fine tridymite crystals matted together.

**2.** Silica brick according to Claim 1, characterised in that also the interspaces between the quartz grain structures having a tridymite layer are filled, at least partially, preferably completely, with matted fine crystalline tridymite formed from a silica sol and/or silica gel.

**3.** Silica brick according to Claim 1 and/or 2, characterised in that the pores, more particularly the interspaces, are filled with a silica sol.

**4.** Silica brick with quartz grain structures that are present in the matrix and have been converted to cristobalite and/or tridymite, characterised in that the pores of the brick, more particularly the interspaces, are filled at least partially but preferably completely with a silica sol and/or silica gel.

5. Silica brick with quartz grain structures that are present in the matrix and have been converted to cristobalite and/or tridymite, <u>characterised in that</u> the pores, more particularly the interspaces, are filled with a dried silica sol.

6. Silica brick according to one or more of Claims 1 to 5, <u>characterised by</u> an increased tridymite content formed from 2.5 to 10wt% silica sol and/or silica gel.

7. Silica brick according to one or more of Claims 1 to 6, additionally containing silicon carbide granules that are present in the matrix.

8. Silica brick according to Claim 7, <u>characterised in that</u> the silicon carbide granule content is 5 to 25wt%.

9. Silica brick according to Claim 7 and/or 8 <u>characterised in that</u> the silicon carbide grains have a protective layer of tridymite crystals matted together.

10. Process for producing a silica brick according to one or more of Claims 1 to 9, whereby from a batch of raw materials consisting of a pure, granular $SiO_2$ component, more particularly of quartzite grains, as well as of hydrated lime and optionally an organic binder an unfinished brick is formed which is fired under the usual firing conditions <u>characterised in that</u> a silica sol and/or a silica gel is admixed with the batch.

11. Process according to Claim 10, <u>characterised in that</u> silica sol or silica gel is admixed in an amount of 1.0 to 3.0 wt% $SiO_2$.

12. Process according to Claim 10 and/or 11, <u>characterised in that</u> the silica brick is impregnated with a silica sol after firing.

13. Process according to Claim 12, <u>characterised in that</u> the silica brick is fired again after impregnating until tridymite is formed from the silica sol.

14. Process for producing a silica brick from the conventional batch of raw materials and under conventional firing conditions, <u>characterised in that</u> the fired brick is impregnated with a silica sol.

15. Process according to Claim 14, <u>characterised in that</u> the silica brick is fired after impregnation until tridymite is formed from the silica sol.

16. Process according to one or more of Claims 10 to 15, <u>characterised in that</u> an anionic silica sol and/or silica gel is used.

17. Process according to one or more of Claims 10 to 15, <u>characterised in that</u> the impregnation is performed under the influence of pressure greater than atmospheric pressure.

18. Process according to one or more of Claims 10 to 15, <u>characterised in that</u> the impregnation is performed under the influence of a vaccum.

19. Process according to one or more of Claims 10 to 18, <u>characterised in that</u> silicon carbide granules are admixed with the batch of raw materials.

20. Process according to Claim 19, <u>characterised in that</u> silicon carbide granules of grain sizes between 0.1 and 1.0 mm., preferably between 0.2 and 0.6mm, are admixed.

21. Process according to Claim 19 and/or 20, <u>characterised in that</u> silicon carbide is admixed in the amount of 5 to 25wt%, preferably 10 to 20wt%.

**Revendications**

1. Brique siliceuse comportant des structures granulaires de quarts perceptibles dans la matrice, comprenant pour l'essentiel de la cristobalite et de la tridymite, phases cristallines du $SiO_2$ issues de la transformation de grains de quarts, les cristaux de cristobalite et/ou de tridymite étant groupés de manière correspondante aux structures granulaires de quarts dans la structure de la brique, caractérisée en ce que les structures granulaires de quarts sont entourées d'une mince bordure de tridymite qui est formée d'un gel de silice et/ou d'un sol de silice et qui est constituée de fins cristaux de tridymite enchevêtrés.

2. Brique siliceuse selon la revendication 1, caractérisée en ce que les interstices situés entre les structures granulaires de quarts possédant une bordure de tridymite sont également remplis, au moins en partie, de préférence en totalité, d'une fraction de tridymite à cristaux fins enchevêtrés formée d'un sol de silice et/ou d'un gel de silice.

3. Brique siliceuse selon la revendication 1 et/ou 2, caractérisée en ce que les pores, en particulier les pores des interstices, sont remplis d'un sol de silice.

4. Brique siliceuse comportant des structures granulaires de quarts perceptibles dans la matrice et transformées en cristobalite et/ou en tridymite, caractérisée en ce que les pores de la brique, en particulier les pores des interstices, sont remplis, au moins en partie, de préférence en totalité, d'un sol de silice et/ou d'un gel de silice.

5. Brique siliceuse comportant des structures granulaires de quarts perceptibles dans la matrice et transformées en cristobalite et/ou en tridymite, caractérisée en ce que les pores, en particulier les pores des interstices, sont remplis d'un sol de silice séché.

6. Brique siliceuse selon une ou plusieurs des revendications 1 à 5, caractérisée par une proportion de tridymite plus élevée, formée de 2,5 à 10 % en poids de sol de silice et/ou de gel de silice.

7. Brique siliceuse selon une ou plusieurs des revendications 1 à 6, comprenant en plus un granulat de carbure de silicium perceptible dans la matrice.

8. Brique siliceuse selon la revendication 7, caractérisée en ce que la proportion de granulat de carbure de silicium est comprise entre 5 et 25 % en poids.

9. Brique siliceuse selon la revendication 7 et/ou 8, caractérisée en ce que les grains de carbure de silicium comportent une couche protectrice composée de cristaux de tridymite enchevêtrés.

10. Procédé de fabrication d'une brique siliceuse selon une ou plusieurs des revendications 1 à 9, une ébauche de brique étant moulée à partir d'un mélange de matières premières comprenant une composante granuleuse pure de $SiO_2$, en particulier des grains de quartzite, ainsi que de l'hydrate de chaux et, le cas échéant, un liant organique, ladite ébauche de brique étant cuite dans des conditions de cuisson habituelles, caractérisé en ce qu'un sol de silice et/ou un gel de silice est ajouté au mélange.

11. Procédé selon la revendication 10, caractérisé en ce que le sol de silice et/ou le gel de silice sont ajoutés dans une proportion de 1,0 à 3,0 % en poids de $SiO_2$.

12. Procédé selon la revendication 10 et/ou 11, caractérisé en ce que, à l'issue de la cuisson, la brique siliceuse est imprégnée d'un sol de silice.

13. Procédé selon la revendication 12, caractérisé en ce que la brique siliceuse est recuite à l'issue de l'imprégnation jusqu'à ce que le sol de silice donne naissance à de la tridymite.

14. Procédé de fabrication d'une brique siliceuse à partir de mélanges habituels de matières premières et dans des conditions de cuisson habituelles, caractérisé en ce que la brique cuite est imprégnée d'un sol de silice.

**15.** Procédé selon la revendication 14, caractérisé en ce que la brique siliceuse est cuite à l'issue de l'imprégnation jusqu'à ce que le sol de silice donne naissance à de la tridymite.

**16.** Procédé selon une ou plusieurs des revendications 10 à 15, caractérisé en ce qu'il fait intervenir un sol de silice et/ou un gel de silice anionique.

**17.** Procédé selon une ou plusieurs des revendications 10 à 15, caractérisé en ce que l'imprégnation est effectuée sous l'action d'une surpression.

**18.** Procédé selon une ou plusieurs des revendications 10 à 15, caractérisé en ce que l'imprégnation est effectuée sous l'action du vide.

**19.** Procédé selon une ou plusieurs des revendications 10 à 18, caractérisé en ce qu'un granulat de carbure de silicium est ajouté au mélange de matières premières.

**20.** Procédé selon la revendication 19, caractérisé en ce que le granulat de carbure de silicium ajouté possède une granulométrie comprise entre 0,1 et 1,0 mm, de préférence entre 0,2 et 0,6 mm.

**21.** Procédé selon la revendication 19 et/ou 20, caractérisé en ce que le carbure de silicium est ajouté dans une proportion de 5 à 25 % en poids, de préférence de 10 à 20 % en poids.

# FIGUR 1

Brenntemperatur ($^{o}$C)

Brenndauer oberhalb 1000$^{o}$C (Std.)

EP 0 279 772 B1

Fig. 2

Fig. 3